(19) Europäisches Patentamt
European Patent Office
Office européen des brevets

(11) Numéro de publication : **0 334 715 B1**

(12) # FASCICULE DE BREVET EUROPEEN

(45) Date de publication du fascicule du brevet : **26.05.93 Bulletin 93/21**

(51) Int. Cl.$^5$ : **C08F 279/02,** C08F 2/14, // (C08F279/02, 212:06)

(21) Numéro de dépôt : **89400705.3**

(22) Date de dépôt : **14.03.89**

(54) **Procédé de fabrication de résine vinylaromatique choc directement à partir de butadiène.**

(30) Priorité : **24.03.88 FR 8803876**

(43) Date de publication de la demande : **27.09.89 Bulletin 89/39**

(45) Mention de la délivrance du brevet : **26.05.93 Bulletin 93/21**

(84) Etats contractants désignés : **AT BE DE FR GB IT NL SE**

(56) Documents cités :
**EP-A- 0 059 231**
**FR-A- 1 128 271**
**GB-A- 1 013 205**
**US-A- 3 264 374**
**US-A- 3 299 178**
**US-A- 3 723 575**

(73) Titulaire : **ELF ATOCHEM S.A.**
**4 & 8, Cours Michelet La Défense 10**
**F-92800 Puteaux (FR)**

(72) Inventeur : **Daban, Jean-François**
**Chemin Nontoulieu**
**F-64800 Nay (FR)**
Inventeur : **Moura, Jean-Louis**
**12, Rue Puymornes**
**F-64140 Billère (FR)**
Inventeur : **Nicol, Pascal**
**7, Rue René Cassin**
**F-64000 Pau (FR)**
Inventeur : **Orozco, Laurence**
**10, Résidence Estibette Rue Laffitte**
**F-64140 Billere (FR)**
Inventeur : **Meunier, Gilles**
**Bourg de Mazerolles**
**F-64230 Lescar (FR)**

(74) Mandataire : **Foiret, Claude et al**
**ELF ATOCHEM S.A. Département Propriété Industrielle La Défense 10 - Cedex 42**
**F-92091 Paris-La-Défense (FR)**

EP 0 334 715 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un procédé de polymérisation d'un monomère vinylaromatique dans la dissolution de polybutadiène résultant directement de la polymérisation du butadiène. Ce mode de polymérisation est particulièrement adapté à la fabrication de résine vinylaromatique choc tel que styrénique choc.

Ces résines styréniques, telles que parmi les plus connues le polystyrène-choc ou l'acrylonitrile-butadiène-styrène (ABS), possédant une bonne tenue mécanique résultent de l'introduction de polybutadiène dans le milieu de polymérisation du monomère vinylaromatique ou de son mélange avec un autre monomère polymérisable possédant une fonction éthylènique.

Dans les procédés classiques, le polybutadiène, préparé préalablement, est dissous dans le monomère vinylaromatique associé ou non à un tiers solvant avant la polymérisation. Le polybutadiène, selon divers procédés connus, résulte de la polymérisation en milieu solvant inerte, de butadiène en présence d'un catalyseur de polymérisation anionique. Un tel procédé est décrit, avec comme catalyseur un composé du lithium, dans le brevet des Etats Unis d'Amérique 3 317 918. Dans ces procédés, le polybutadiène, après destruction du catalyseur, est récupéré sous forme pour le moins excessivement visqueuse après traitement d'élimination des résidus catalytiques, du solvant et du monomère non réagi. Ce traitement constitue une étape influençant les caractéristiques du polybutadiène en ce qu'elle entraine une certaine réticulation qui présente ensuite des inconvénients dans la fabrication de la résine styrénique choc.

Pour utiliser ce polybutadiène dans la fabrication des résines vinylaromatiques-chocs, il est indispensable, avant la polymérisation en masse ou masse-suspension, de le mettre en solution dans le monomère vinylaromatique pour donner au polymère styrénique les propriétés finales souhaitées. La préparation de la solution polybutadiène-monomère vinylaromatique nécessite un équipement non négligeable et un temps important pour réaliser une mise en solution de l'élastomère dans le monomère. Le polybutadiène réticulé se dissolvant mal, la solution obtenue doit être préalablement filtrée avant la polymérisation du monomère vinylaromatique pour éviter l'encrassement de l'appareillage.

En outre le polybutadiène, ayant perdu par réticulation des liaisons éthyléniques, est moins apte au greffage sur les chaines vinylaromatiques. Cela entraine une réduction de sa compatibilité avec le polyvinylaromatique, et en conséquence, une diminution des propriétés mécaniques de la résine choc finale et des défauts d'aspect apparaissant entre autres sous forme de picots (fish eyes).

Pour toutes ces raisons ont été recherchées des méthodes de préparation du polybutadiène permettant d'éviter des manipulations inopportunes.

C'est ainsi que selon la demande EP 0059231 on polymérise partiellement le butadiène anioniquement en présence de monomère vinylaromatique avec un composé du lithium comme catalyseur. Selon ce procédé on obtient un copolymère butadiène-vinylaromatique que l'on peut immédiatement, après mélange avec un monomère vinylaromatique, passer en polymérisation. Cette technique simplifie effectivement la préparation du polybutadiène et la préparation du polymère-choc en ce que respectivement elle supprime d'une part l'étape d'élimination du solvant et de séchage du polybutadiène, et d'autre part l'étape de broyage et de mise en solution du polybutadiène dans le monomère vinylaromatique. Elle présente cependant au moins deux inconvénients majeurs. Le premier est de fabriquer, non pas un polybutadiène pur, mais un copolymère de butadiène-vinylaromatique. Le second est le danger représenté par le contact du catalyseur anionique avec le monomère vinylaromatique pouvant entraîner des emballements de réaction et à la limite l'explosion du réacteur.

C'est pourquoi, comme il est indiqué dans cette EP 0059231, afin d'éviter une polymérisation rapide incontrôlée du monomère vinylaromatique, il est nécessaire de travailler impérativement au dessous de 50°C et de ne polymériser que partiellement le butadiène d'où opération obligatoire d'élimination du butadiène non réagi en fin de réaction.

Selon la présente invention, on remédie à ces inconvénients en procédant à une polymérisation anionique du butadiène en présence, d'un solvant inerte vis à vis du butadiène et des monomères vinylaromatiques et plus particulièrement du styrène. L' éthylbenzène est recommandé comme solvant bien qu'entre autres on puisse également utiliser le toluène, le benzène, le cyclohexane.

La polymérisation du butadiène achevée et après destruction du catalyseur on poursuit la polymérisation par ajout dans le milieu de monomère vinylaromatique. Aucune opération de purification et d'élimination de tiers produits, solvant ou monomère, n'est nécessaire bien que le butadiène non réagi puisse être éliminé par exemple par distillation sous vide si on le souhaite.

En fait le procédé de fabrication selon l'invention de résine vinylaromatique choc par polymérisation radicalaire en milieu solvant inerte d'un monomère vinylaromatique en présence d'un polybutadiène est caractérisé en ce que l'on polymérise anioniquement du butadiène dans un solvant inerte vis à vis du butadiène et du monomère vinylaromatique puis après destruction du catalyseur anionique, on initie, après ajout de monomère vinylaromatique dans le milieu la polymérisation radicalaire.

Pour être complet, le procédé de préparation préféré est caractérisé en ce que dans 20 à 50 % en poids de solvant par rapport au butadiène total mis en réaction, on prépare par polymérisation anionique du butadiène à une température comprise entre 20 et 130° C une dissolution de polybutadiène dans le solvant, et en ce que, après destruction du catalyseur anionique on poursuit la polymérisation, après ajout de monomère vinylaromatique dans la dissolution et initiation radicalaire, à une température comprise entre 90 et 170° C.

D'une façon plus détaillée le procédé de préparation consiste à polymériser le butadiène dans une quantité suffisante de solvant inerte pour maintenir sous une forme sensiblement fluide le polybutadiène final, la polymérisation étant initiée par un catalyseur anionique à base de préférence de lithium. La quantité d'éthylbenzène mise en oeuvre est habituellement comprise entre 20 et 50 % en poids du butadiène total. La température de polymérisation du butadiène peut varier dans une large gamme comprise entre 20 et 130° C et de préférence de 55 à 130 ° C. Compte tenu de la souplesse de la réaction il est possible d'autoréguler la température de polymérisation par apport continu du butadiène dans le milieu. Un tel système permet de réaliser la polymérisation dans le minimum de temps pour le minimum de dépense d'énergie.

De façon générale la polymérisation s'effectue dans un réacteur muni des moyens habituels de chauffage, de refroidissement, d'agitation et de reflux.

Les catalyseurs préférés au lithium sont connus, ils sont en particulier décrits dans le brevet des Etats-Unis d'Amérique 3 317 918, le plus utilisé étant le n-butylithium (n-BuLi).

En fin de polymérisation du butadiène la désactivation du catalyseur est réalisée par addition d'un composé donneur de proton. A titre d'exemple on peut citer : l'eau, le méthanol, l'éthanol, le propanol, l'acide acétique et l'acide propionique. Ce composé est introduit dans le milieu réactionnel, dilué éventuellement dans un solvant inerte, en quantité suffisante pour détruire les sites actifs.

La solution obtenue de polybutadiène dans le solvant peut être conservée telle quelle. On préfère cependant après destruction du catalyseur poursuivre l'opération de fabrication du polymère-choc en introduisant dans le milieu polybutadiène le monomère vinylaromatique et éventuellement les promoteurs de radicaux libres.

Le polybutadiène obtenu selon le procédé de l'invention correspond en tous points au polybutadiène de l'art antérieur et possède de façon générale un poids moléculaire de l'ordre de 50 000 à 700 000.

De façon plus détaillée le procédé de fabrication du polymère-choc consiste à introduire dans le réacteur contenant le polybutadiène en solution dans le solvant, le catalyseur anionique étant détruit, le monomère vinylaromatique.

De préférence la solution de polybutadiène n'a pas à être refroidie. La réaction de polymérisation radicalaire peut être initiée de façon connue à partir d'initiateurs de radicaux libres conventionnels comme les composés peroxydiques, azo, ou, azo et peroxydiques. La création de radicaux libres peut encore être initiée thermiquement. Généralement la polymérisation radicalaire s'effectue à une température d'environ 60 à 170°C et mieux de 110 à 170°C lors de l'initiation thermique. Durant au moins la partie initiale de la polymérisation et tout au moins jusqu'à l'inversion de phase, c'est-à-dire l'apparition de préférence de 18 à 35 % d'extrait sec dans le réacteur, il est recommandé de maintenir une agitation dans le réacteur. Un appareillage pour une telle polymérisation est décrit dans le brevet des Etats Unis d'Amérique 3 243 481. Quand le degré de polymérisation du monomère mis en oeuvre est atteint, le polymère est séparé du solvant et du monomère vinylaromatique qui n'a pas polymérisé par un traitement à chaud, de l'ordre de 180 à 250°C, éventuellement sous vide, dans une chambre de dévolatilisation pour éliminer les composés volatils.

Le monomère vinylaromatique utilisé dans le procédé répond à la formule connue

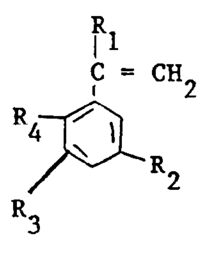

dans laquelle $R_1$ est l'hydrogène ou le groupement méthyle, $R_2$, $R_3$ et $R_4$ étant choisis parmi l'hydrogène et les groupements alkyles possédant jusqu'à 10 atomes de carbone, avec la limitation que le nombre total des atomes de carbone de $R_2$, $R_3$ et $R_4$ n'est pas supérieur à 10. Parmi ces monomères vinylaromatiques les plus connus sont le styrène, le vinyltoluène, l'alpha méthylstyrène, le para t-butylstyrène, le 3,4-diméthylstyrène, le 2-éthylhexylstyrène, le n-décylstyrène et le n-butylstyrène.

Par monomère vinylaromatique, on entend également les mélanges de monomère vinylaromatique avec

au moins un autre monomère polymérisable contenant une fonction éthylénique. Parmi ces monomères, les plus couramment associés au vinylaromatique sont: l'acrylonitrile, le méthacrylonitrile, l'éthacrylonitrile et mélanges de ceux-ci, les acrylates de méthyle, d'éthyle, de butyle, d'éthyl-2 hexyle.

Il n'est pas exclu d'ajouter, à n'importe quel moment de la polymérisation du monomère vinylaromatique, les adjuvants habituels aux polymères vinylaromatiques. Ce peuvent être en particulier des anti-oxydants ou des lubrifiants comme des huiles minérales.

L'intérêt de la technique est d'obtenir par un procédé simplifié des produits à taux de gels et taux de greffage améliorés.

Les exemples suivants illustrent l'invention.

EXEMPLE 1

(a) Dans un réacteur de 6 litres équipé des moyens habituels de régulation de température, de reflux et d'agitation on charge, après une purge à l'azote et plusieurs lavage avec une solution de n-BuLi dans l'éthylbenzène, 600 g. d'éthylbenzène séchés sur tamis moléculaire (E A) et 3,5 ml d'une solution de 1,6 M de n-BuLi dans l'hexane. La polymérisation est amorcée par introduction continue de butadiène.

La température dans le réacteur s'élève rapidement de 20 à 80°C réglée ultérieurement à 80°C par ajout régulier de butadiène. Après 1,5 heure et addition totale de 870 g. de butadiène, la polymérisation est arrêtée par adjonction d'éthanol.

Une fraction de polybutadiène obtenu est récupérée pour déterminer la masse moléculaire ainsi que la microstructure qui figurent dans le tableau I ci-après.

(b) A 213 g. de solution de polybutadiène obtenue dans les conditions décrites en (a), on ajoute sans refroidir le milieu 100 g. de styrène préchauffé et 36 g. d'huile minérale hydrogénée à plus de 95 % (type PRIMOL). Après agitation pour homogénéiser le mélange on obtient une solution limpide et visqueuse. La température du milieu réactionnel, maintenu sous agitation, est élevée de 80 à 110°C. Lorsque l'extrait sec dans le réacteur est de 30 %, le volume en réaction est transféré dans une enceinte équipée d'un système permettant d'homogénéiser la masse visqueuse et dans laquelle la polymérisation est achevée avec la programmation de température suivante : 2,5 heures à 175°C et 0,5 heure à 240°C sous vide.

(c) 96 g. d'un polybutadiène (bas cis) fabriqué et séché industriellement dont les caractéristiques moléculaires données dans le tableau I, sont très comparables à celles obtenues pour le polybutadiène de l'exemple 1-a, sont traités de la même façon que dans l'exemple 1-b. Pour se trouver rigoureusement dans les mêmes conditions ont été ajoutés 55 g. d'éthylbenzène. Dans ce cas la dissolution du polybutadiène dans le mélange styrène-éthylbenzène est très lognue, environ 14 heures pour obtenir une solution limpide. Les résultats acquis sur le polymère choc final sont moins performants.

EXEMPLE 2

(a) Le procédé décrit en 1-b est repris pour traiter 640 g. d'une solution d'un polybutadiène haut-cis, dont les caractéristiques sont données dans le tableau I, fabriqué industriellement et conservé dans son solvant de polymérisation : 85 % en masse de toluène.

La dissolution est immédiate ; les résultats d' analyse sur le polymère choc obtenu dans les conditions de l'exemple 1-b figurent dans le tableau II.

(b) 96 g. du même polybutadiène après séchage industriel dans une chambre de dévolatilisation à haute température, sont traités de manière analogue à celle décrite en 1-c. La dissolution est très longue, environ, 15 heures. La qualité du polymère choc obtenu s'en trouve diminuée.

TABLEAU I

MASSES MOLECULAIRES ET MICROSTRUCTURES DES DIFFERENTS POLYBUTADIENES DES EXEMPLES

| Polybutadiène | Mn | Mw | I | % cis 1,4 | % trans 1,4 | % vinyl |
|---|---|---|---|---|---|---|
| Exemple 1-a | 198 000 | 446 000 | 2,3 | 51,0 | 39,0 | 9,0 |
| Exemple 1-c | 182 000 | 434 000 | 2,4 | 50,7 | 39,1 | 10,2 |
| Exemple 2-a | 103 000 | 368 000 | 3,6 | 94,0 | 4,0 | 2,0 |
| Exemple 2-b | 77 000 | 362 000 | 4,7 | 94,0 | 3,0 | 3,0 |

Mn = Masse moléculaire en nombre

Mw = Masse moléculaire en poids

I = Indice de polymolécularité $\frac{Mw}{Mn}$

Le % vinyl correspond au pourcentage d'isomère vinyl 1,2 obtenu par addition 1,2 du monomère butadiène sur la chaine de polybutadiène.

TABLEAU II

TAUX DE GELS ET POURCENTAGE DE POLYSTYRENE GREFFE OBRTENUS POUR LES POLYSTYRENES OBTENUS DANS LES EXEMPLES

| Polystyrène choc | Taux de gels % | Polystyrène greffé % |
|---|---|---|
| Exemple 1-b. | 0 | 11,6 |
| Exemple 1-c | 0,2 | 8,4 |
| Exemple 2-a | 0,03 | 9,6 |
| Exemple 2-b | 0,11 | 6,8 |

Pour obtenir le taux de gel, le polystyrène choc est dissous dans le toluène. On précipite ensuite de la solution par le méthanol le polystyrène homopolymérisé et le polystyrène greffé sur polybutadiène. Le taux de gel est obtenu par filtration sur un filtre de 10 microns du produit dissous dans le toluène et récupération des microgels en suspension.

Par extraction par solvant , mélange cyclohexane-acétone à 20-80 en volume, on sépare du produit précipité le polystyrène homopolymère greffé sur le polybutadiène.

## Revendications

1. Procédé de fabrication de résine vinylaromatique choc par polymérisation radicalaire en milieu solvant inerte d'un monomère vinylaromatique en présence d'un polybutadiène caractérisé en ce que l'on polymérise anioniquement du butadiène dans un solvant inerte vis à vis du butadiène et du monomère vinylaromatique puis après destruction du catalyseur anionique, on initie, après ajout de monomère vinylaromatique dans le milieu la polymérisation radicalaire.

2. Procédé selon la revendication 1 caractérisé en ce que dans 20 à 50 % en poids de solvant par rapport au butadiène total mis en réaction on prépare par polymérisation anionique du butadiène à une température comprise entre 20 et 130°C une dissolution de polybutadiène dans le solvant et en ce que, après destruction du catalyseur anionique on poursuit la polymérisation, après ajout de monomère vinylaromatique dans la dissolution et initiation radicalaire, à une température comprise entre 90 et 170°C.

3. Procédé selon l'une des revendications 1 ou 2 caractérisé en ce que le solvant est l'éthylbenzène.

## Claims

1. A process for the preparation of a high-impact (sic. choc) vinylaromatic resin by the radical polymerization in an inert solvent medium of a vinylaromatic monomer in the presence of a polybutadiene, characterized in that firstly the butadiene is polymerized anionically in a solvent which is inert to the butadiene and the vinylaromatic monomer, and then, after the anionic catalyst has been inactivated, the vinylaromatic monomer is added to the medium and radical polymerization is initiated.

2. A process according to claim 1, characterized in that a dissolution of polybutadiene in the solvent is obtained by anionic polymerization of the butadiene at a temperature of from 20 to 130°C, the amount of solvent being from 20 to 50% by weight based on the total weight of butadiene reacted and, after the anionic catalyst has been inactivated and the vinylaromatic monomer has been added to the dissolution and radical initiation, polymerization is continued at a temperature of from 90 to 170°C.

3. A process according to one of claims 1 or 2, characterized in that the solvent is ethyl benzene.

## Patentansprüche

1. Verfahren zur Herstellung eines vinylaromatischen, schlagfesten Harzes durch Radikalpolymerisation eines vinylaromatischen Monomeren in einem inerten Lösungsmittel und in Gegenwart eines Polybutadiens, dadurch gekennzeichnet, daß man das Butadien in einem gegenüber dem Butadien und dem vinylaromatischen Monomeren inerten Lösungsmittel anionisch polymerisiert und dann nach der Zerstörung des anionischen Katalysators und der Hinzufügung des vinylaromatischen Monomeren zu der Polymerisationsmischung die radikalische Polymerisation initiiert.

2. Verfahren nach Anspruch 1, dadurch gekennzeichnet, daß man in 20 bis 50 Gewichtsprozent Lösungsmittel, bezogen auf das gesamte umzusetzende Butadien, durch anionische Polymerisation des Butadiens bei einer Temperatur zwischen 20°C und 130°C eine Lösung von Polybutadien in dem Lösungsmittel herstellt und nach der Zerstörung des anionischen Katalysators und Zugabe des vinylaromatischen Monomeren zur Lösung und Einleitung der radikalischen Startreaktion die Polymerisation bei einer Temperatur zwischen 90°C und 170°C fortsetzt.

3. Verfahren nach einem der Ansprüche 1 und 2, dadurch gekennzeichnet, daß das Lösungsmittel Ethylbenzol ist.